# EUROPÄISCHE PATENTANMELDUNG

(11) **EP 2 860 833 A2**
(43) Veröffentlichungstag der Anmeldung: **15.04.2015**
(21) Anmeldenummer: 14187097.2
(22) Anmeldetag: 30.09.2014
(51) Int. Cl.: H02G 3/38, H02G 9/02, H02G 3/04, B60L 11/18

(54) **Bodenelement für elektrische Installationen und System mit Bodenelementen**

(30) Priorität: 11.10.2013 DE 102013016874
(71) Anmelder: RWE AG, 45128 Essen (DE)
(72) Erfinder: Weißenfels, Robert Dr., 44265 Dortmund (DE)
(74) Vertreter: Cohausz & Florack

(57) **Zusammenfassung**

Bodenelement 2 für elektrische Installationen 26. Eine flächige elektrische Installation ist insbesondere mit Hilfe eines Bodenelements 2 möglich, welches ein flächiges Trägerelement 4 mit zumindest drei Seitenwänden 10 und einer im Wesentlichen ebenen Oberfläche 4a umfasst mit einem modularen elektrischen Verbindungselement 32 an zumindest zwei Seitenwänden 10a, 10b und einem modularen mechanischen Verbindungselement 30 an zumindest zwei Seitenwänden 10a, 10b.

## Beschreibung

Der Gegenstand betrifft ein Bodenelement für elektrische Installationen umfassend ein flächiges Trägerelement mit zumindest drei Seitenwänden und einer im Wesentlichen ebenen Oberfläche sowie ein System mit einem solchen Bodenelement.

Das Aufstellen von elektrischen Installationen, insbesondere von Ladestationen für Elektrofahrzeuge, erfordert in der Regel umfangreiche Tiefbau- und Elektroarbeiten.
Es ist zum Einen notwendig, die elektrische Verbindung mit dem Energieversorgungsnetz herzustellen, wozu in der Regel eine Unterflurverkabelung mit dem elektrischen Verteilnetz notwendig ist und zum Anderen muss für einen mechanisch sichern Stand ein Fundament für die Installation gegossen werden, auf das diese im Anschluss aufgesetzt werden kann.

Während andauernder Baumaßnahmen, beispielsweise in Neubaugebieten oder bei der Straßenerneuerung, sowie zum Beispiel für den temporären Einsatz, beispielsweise bei Großveranstaltungen, sind die bisher notwendigen Arbeiten zum Aufstellen von Installationen zu umfangreich, um in diesen Fällen solche Installationen zur Verfügung zu stellen. Mit der zunehmenden Elektrifizierung des Straßenverkehrs wird es jedoch notwendig werden, kurzfristig und teilweise auch temporär Möglichkeiten zum Aufladen von Elektrofahrzeugen zur Verfügung zu stellen. Der Aufbau der Ladestationen muss dabei mit einem verringerten technischen Aufwand auskommen.

Die DE 10 2010 046 263 A1 beschreibt die Verlegung von Stromkabeln in einem Formstein, der regelmäßig als Bordstein ausgeführt wird. Der so geformte Formstein lässt sich mit dem Untergrund mittels hydraulischer Binder verbinden. Die Formsteine lassen sich aneinander legen und anschließend die elektrische Verkabelung vornehmen.

Da die aus dieser Druckschrift bekannten Formsteine nur flächig aneinander gelegt werden können, besteht keine mechanische Fixierung der Formsteine untereinander. Es ist notwendig, diese miteinander zu verkleben oder diese zumindest mit dem Untergrund dauerhaft zu befestigen. Dies führt jedoch erneut zu einem erheblichen Installationsaufwand.

Die US 5,847,537 beschreibt ein Installationssystem für Ladestationen, welches eine Überflurverkabelung vorschlägt. Mittels Traversen ist es möglich, Ladestationen mit einer Generatorstation zu verbinden.

Ausgehend von diesem Stand der Technik lag dem Gegenstand die Aufgabe zugrunde, ein besonders einfach installierbares, mechanisch robustes Bodenelement für elektrische Installationen zur Verfügung zu stellen.

Diese Aufgabe wird gegenständlich durch ein Bodenelement nach Anspruch 1 sowie ein System nach Anspruch 14 gelöst.

Das Bodenelement ist vorzugsweise fundamentlos und ermöglicht eine temporäre Aufstellung. Hierzu weist es ein flächiges Trägerelement auf, welches durch Endflächen einer im Wesentlichen ebenen Oberfläche (Deckfläche) räumlich begrenzt ist. Die Endflächen können die zumindest drei, vorzugsweise vier, insbesondere sechs Seitenwände und/oder ein Unterboden sein. An den Endflächen, vorzugsweise an den Seitenwänden, sind Verbindungselemente vorgesehen, mit denen die Bodenelemente untereinander mechanisch sowie elektrisch verbunden werden können. Dabei kann ein modulares elektrisches Verbindungselement an zumindest einer Endfläche, vorzugsweise zwei Endflächen vorgesehen sein. Mit Hilfe des elektrischen Verbindungselementes ist es möglich, elektrische Verbindungen zwischen zwei Bodenelementen in besonders einfacher Weise herzustellen. Die elektrischen Verbindungselemente sind modular ausgebildet, was dazu führt, dass elektrische Verbindungselemente von jeweils zwei Bodenelementen zueinander passend geformt sind und bei der Verlegung der Bodenelemente in besonders einfacher Art und Weise eine elektrische Verbindung herstellbar ist

Neben der elektrischen Verbindung kann es notwendig sein, dass die Bodenelemente zueinander lagestabil sind. Hierzu ist kann es notwendig sein, die Bodenelemente miteinander mechanisch zu verbinden. Anders als dies im Stand der Technik mittels Verkleben vorgeschlagen wird, schlägt die Erfindung ein modulares mechanisches Verbindungselement an zumindest einer, vorzugsweise zwei Endflächen vor. Die Modularität der Verbindungselemente erlaubt es, jeweils zwei Bodenelemente mechanisch in besonders einfacher Art und Weise miteinander zu mechanisch verbinden. Dies kann durch Stecken, Schieben oder Schwenken bzw. Drehen erfolgen. Über die Verbindungselemente hinausgehende Verbindungsmittel, wie beispielsweise Kleber, Klemmen, Schrauben oder dergleichen sind nicht zwingend notwendig. Die mechanischen Verbindungselemente sind derart modular aufgebaut, dass zwei Bodenelementen derart miteinander interagieren, dass die Bodenelemente, welche über die mechanischen Verbindungselemente miteinander verbunden sind, lagestabil zueinander sind.

Die Endflächen der Bodenelemente können z.B. Seitenwände sein. Hierbei ist zu beachten, dass die Seitenwände auch versetzt nach innen liegen können, so dass zwischen einer Kante des Trägerelements und einer Seitenwand ein Freiraum ist. Die Seitenwände müssen somit nicht in einer Ebene mit den Außenkanten des Trägerelements und/oder der Deckfläche des Trägerelements fluchten.

Ein Verschieben der Bodenelemente zueinander in zumindest einer Achse kann durch die mechanischen Verbindungselemente verhindert sein. Insbesondere können die mechanischen Verbindungselemente so geformt sein, dass die Bodenelemente nur senkrecht zu der Deckfläche zueinander verschoben werden können. Ein Verschieben parallel und/oder senkrecht zu einer Kante der zumindest einer der Seitenwände kann im Wesentlichen verhindert sein.

Die mechanischen Verbindungselemente können auch so geformt sein, dass sich ein Spiel zwischen den Seitenwänden zweier Bodenelemente bildet. Das Spiel ermöglicht ein Verschieben der Bodenelemente parallel zueinander entlang oder senkrecht zu einer Kante zumindest einer der Seitenwände unter Krafteinwirkung. Hierdurch können die Bodenelemente zueinander ausgerichtet werden. Die modularen mechanischen Verbindungselemente sind derart, dass sich eine Mehrzahl von Bodenelementen zu einer im Wesentlichen flächigen Installation zusammenfügen lassen.

Die gegenständlichen Bodenelemente sind fundamentlos auf der Oberfläche / dem Untergrund installierbar und können miteinander kraft- und/oder formschlüssig verbunden werden. Eine Erhöhung der Stabilität lässt sich durch Bodenanker oder Aufnahmeelemente für Bodenanker im Bereich einer Unterseite des Bodenelements erreichen. Dabei kann ein Bodenanker oder ein in ein Aufnahmeelement geschobener Bodenanker punktförmig das Bodenelement am Untergrund befestigen. Auch können mehr als ein Bodenanker beziehungsweise ein Aufnahmeelement pro Bodenelement, beispielsweise ein Bodenanker beziehungsweise Aufnahmeelemente pro Seitenwand des Bodenelements vorgesehen sein. Die Anordnung des Bodenankers beziehungsweise des Aufnahmeelements am Bodenelement kann derart sein, dass diese berücksichtigt, wo eine Beschädigung des Untergrunds nach Abbau der Bodenelemente akzeptabel ist. Beispielsweise ist dies im Bereich der Mitte des Bodenelements dann akzeptabel, wenn nach dem Abbau des Bodenelements ohnehin an dieser Stelle eine Ladestation installiert werden soll. Insbesondere kann der Bodenanker dort angebracht werden, wo nach dem Abbau des Bodenelements später eine herkömmliche Installation installiert wird. Dort wird ohnehin der Untergrund beschädigt werden.

Die elektrischen Verbindungselemente können dergestalt sein, dass sie eine Aufnahme für ein elektrisches Kabel aufweisen. Dies ermöglicht es, die Bodenelemente modular mittels der mechanischen Verbindungselemente zusammenzufügen und anschließend die elektrische Verkabelung vorzunehmen. Hierzu kann das Kabel entlang der elektrischen Verbindungselemente von Bodenelement zu Bodenelement weitergeführt werden. So ist es möglich, dass in die Verbindungselemente integrierte Kabelkanäle oder Freiräume innerhalb des Bodenelements nach außen führen. Auch können Leerrohre oder sonstige Führungselemente in den elektrischen Verbindungselementen münden. Insbesondere münden die Führungselemente, Leerrohre oder Kabelkanäle ausgehend von den elektrischen Verbindungselementen an Stellen des Bodenelements, an denen die elektrische Installation angebracht wird. Dies ermöglicht es, eine Verkabelung der elektrischen Installationen über mehrere Bodenelemente hinweg zu realisieren.

Auch ist es möglich, dass die elektrischen Verbindungselemente unmittelbar elektrische Kontaktelemente ausweisen. Vorzugsweise sind dies drei, galvanisch voneinander getrennte Kontaktelemente, um z.B. im Falle einer Wechseistromverkabelung eine Masserückführung, eine Phase und einen Schutzleiter zur Verfügung zu stellen. Mehr als drei Kontaktelemente sind jedoch auch möglich. Auch ist es möglich, dass nur zwei Kontaktelemente vorhanden sind, insbesondere bei einer Gleichstromverkabelung. Die Kontaktelemente sind mit jeweils einem unterhalb der Oberfläche des Trägerelements angeordneten elektrischen Leiter elektrisch verbunden.

Für den Fall, dass die Verbindungselemente unterhalb der Deckfläche des Trägerelements angeordnete Kabelkanäle, Freiräume oder Leerrohre aufweisen, ist es möglich, das Bodenelement mit vorkonfektionierten Kabeln zu bestücken. Die Vorkonfektionierung kann derart sein, dass sich die Kabellänge und die Kantenlänge einer Seitenwand in etwa entsprechen. Die Kabellänge kann um beispielsweise 10% oder z.B. 10 cm größer sein als die Kantenlänge einer Seitenwand, so dass eine Verkabelung einfach möglich ist.

Die Modularität der elektrischen Verbindungselemente ist beispielsweise dadurch gewährleistet, dass die elektrischen Verbindungselemente jeweils zumindest Stecker und Buchse aufweisen oder dass die elektrischen Verbindungselemente hermaphrodit gebildet sind. Im letzteren Fall sind die Verbindungselemente identisch aufgebaut und lassen sich durch ineinander stecken oder schieben miteinander verbinden. Es wird keine Unterscheidung mehr zwischen Stecker oder Buchse gemacht, da die jeweiligen Verbindungselemente stets gleich aufgebaut sind.

Die Modularität der elektrischen Verbindungselemente wird auch dadurch erreicht, dass diese an einer ersten Endfläche zumindest einen Stecker aufweisen und einen an die erste Endfläche vorzugsweise unmittelbar angrenzenden Endfläche eine zu dem Stecker komplementäre Buchse. Insbesondere sind die jeweils aneinander grenzenden Endflächen eines Bodenelements wechselweise entweder mit einem Stecker oder einer Buchse ausgestattet. Bei einem viereckigen Bodenelement sind dabei beispielsweise an zwei einander gegenüberliegenden Endflächen Stecker und an den jeweils anderen, einander gegenüberliegenden Endflächen Buchsen angeordnet. Auch können jeweils zwei aneinander angrenzende Seitenwände mit jeweils zumindest eine Buchse und respektive zumindest einen Stecker aufweisen. Bei einem hexagonalen Bodenelement können jeweils zumindest drei Stecker und zumindest drei Buchsen, wechselweise an den jeweiligen Endflächen angeordnet sein. In diesem Fall können die Bodenelemente besonders leicht elektrisch miteinander verbunden werden, da ein Bodenelement mit einer Endfläche stets an ein anderes Bodenelement mit einer anderen Endfläche angekoppelt werden kann. Die beschriebene Anordnung von Stecker und Buchsen an den jeweiligen Endflächen ermöglicht eine vollflächige Verlegung mit stets gleichen Bodenelementen.

Die elektrischen Verbindungselemente können unmittelbar in den mechanischen Verbindungselementen integriert sein. Dies gewährleistet, dass beim mechanischen Verbinden von zwei Bodenelementen unmittelbar die elektrische Verbindung hergestellt werden kann.

Zur modularen Verlegung der Bodenelemente ist es sinnvoll, dass die mechanischen Verbindungselemente von zwei Bodenelementen formschlüssig miteinander in Eingriff kommen. Insbesondere sind die Verbindungselemente an aneinander angrenzenden Endflächen eines Bodenelements komplementär zueinander. Entsprechend dem komplementären Aufbau der elektrischen Verbindungselemente an aneinander angrenzenden Endflächen können auch die mechanischen Verbindungselemente sich abwechselnd an den Endflächen gebildet sein.

Um ein Verschieben der Bodenelemente gegeneinander zu erschweren, wird vorgeschlagen, dass die mechanischen Verbindungselemente als Schnappverbindung gebildet sind. Hierbei kann eine Lasche eines ersten mechanischen Verbindungselements einen Hinterschnitt eines zweiten mechanischen Verbindungselements in der Art eines Schnapp- oder Clipverschlusses hintergreifen.

Besonders einfach lassen sich die Bodenelemente miteinander verbinden, wenn die mechanischen Verbindungselemente und/oder die elektrischen Verbindungselemente an einen an einer der Deckfläche des Trägerelements abgewandten Außenkante zumindest einer Seitenwand zumindest teilweise verlaufenden Flansch angeordnet sind. Der Flansch ist vorzugsweise in einer Ebene der Auflagefläche des Bodenelements auf dem Untergrund und/oder auf der der Deckfläche des Trägerelements abgewandten Seite des Bodenelementes angeordnet. An dem Flansch können sowohl die mechanischen als auch die elektrischen Verbindungselemente angeordnet sein. Hierbei sind insbesondere Vorsprünge und Rücksprünge innerhalb des und/oder an dem Flansch sinnvoll.

Die Montage der Bodenelemente wird dadurch erleichtert, wenn die mechanischen Verbindungselemente und/oder die elektrischen Verbindungselemente im Wesentlichen parallel zur Deckfläche oder dem Unterboden des Trägerelementes oder im Wesentlichen senkrecht zur Deckfläche oder dem Unterboden des Trägerelements angeordnet werden.

Die Verbindung der Bodenelemente kann zusätzlich dadurch gesichert werden, dass Schraubverbindungen unter Verwendung von z.B. Flachteile mit Gewinde und entsprechenden Bohrungen in den Trägerelementen vorgesehen sind. Auch HakenÖse-Konstruktionen, insbesondere mit Feder-Zug-Konstruktion, eignen sich zur ergänzenden Verbindung der Bodenelemente.

Das Bodenelement kann auch aus einem Trägerelement und einem Unterbodenelement gebildet sein. Trägerelement und Unterbodenelement sind sandwichartig beabstandet voneinander miteinander verbunden. Abstandshalter können einen Verbindungsbereich bereitstellen. Hierbei können die Abstandshalter insbesondere eine Wabenstruktur aufweisen und Trägerelement und Unterbodenelement mechanisch lagestabil miteinander verbinden. Insbesondere können die Abstandhalter stoffschlüssig mit dem Trägerelement und/oder dem Unterbodenelement verbunden sein.

jedes einzelne Bodenelement beziehungsweise dessen Trägerelement kann z.B. eine Materialstärke zwischen 5 mm und 20 mm haben. Insbesondere kann die Materialstärke abhängig von dem verwendeten Material sein. Das Trägerelement kann beispielsweise eine Kantenlänge von 1,50 m haben und aus Stahl gebildet sein. Armierter oder nicht armierter Formbeton kann ebenfalls für das Trägerelement verwendet werden, wobei hier jedoch eine größere Materialstärke als 20 mm notwendig sein wird. Auch sind Leichtbau-Konstruktionen, z.B. mit Gitter oder Wabenstrukturen möglich. Hierbei kann zusätzlich eine Abdeckung des Gitters oder der Wabenstruktur aus z.B. 1 mm Stahlblech vorgesehen sein. Das Gewicht eines Bodenelements mit Leichtbau-Konstruktion kann geringer sein, als das eines mit einer massiven Stahlplatte. Insofern kann die Kantenlänge abhängig vom Gewicht des Bodenelements sein, und beim Einsatz einer Leichtbau-Konstruktion größer als 1,5m, beispielsweise 2m betragen.

Das Unterbodenelement kann auf der dem Trägerelement abgewandten Seite eine Reliefstruktur aufweisen. Insbesondere ein Profil, insbesondere ein waffelartiges Profil dient dazu, ein Verrutschen des Bodenelements auf dem Boden zu verhindern.

Vorzugsweise ist das Trägerelement rechteckig, quadratisch oder hexagonal.

Das Trägerelement kann ein mechanisches Aufnahmeelement für eine Installation, insbesondere eine Ladestation für Elektrofahrzeuge aufweisen. Dies kann beispielsweise eine Montageöffnung in dem Trägerelement sein. Das mechanische Aufnahmeelement kann beispielsweise bereits Bohrungen aufweisen, um die Ladestation hiermit zu verschrauben. Bei Nichtnutzung des Aufnahmeelements kann dieses beispielsweise durch einen Deckel, beispielsweise ein Abdeckblech verschlossen sein. Dieses Abdeckblech kann beispielweise mit einem das mechanische Aufnahmeelement hintergreifenden Verschlussmechanismus versehen sein, sodass es sich nicht ohne Weiteres von oben aus dem mechanischen Aufnahmeelement entfernen lässt.

An oder in dem mechanischen Aufnahmeelement können bereits elektrische Kontakte vorgesehen sein. Diese elektrischen Kontakte können mit den jeweiligen elektrischen Kontakten der elektrischen Verbindungselemente kurzgeschlossen sein. Somit kann die elektrische Installation, insbesondere die Ladestation, unmittelbar elektrisch in Kontakt mit den elektrischen Verbindungselementen gebracht werden. Hierbei ist auch daran zu denken, dass die elektrischen Kontakte als Stecker und/oder Buchse gebildet sein können und die Ladestation einfach auf die elektrischen Kontakte mit hierzu komplementären Steckern oder Buchsen aufgesteckt werden kann.

Eine Absenkung eines Bodenelements, insbesondere im Bereich eines Bordsteins ermöglicht es, eine Rampe zu bilden. Hierdurch ist beispielsweise ein Stolperschutz gewährleistbar.

Auf dem Trägerelement beziehungsweise seiner Oberfläche kann eine Drainage vorgesehen sein. Beispielsweise kann das Trägerelement eine Neigung von der Mitte zu den Seitenwänden in der Art eines Spitzdaches aufweisen. Auch eine Lochkonstruktion ist möglich, um eine Drainage von Regenwasser zu ermöglichen. Das Trägerelement ist vorzugsweise biegesteif und aus einer Eisenlegierung, insbesondere Stahl oder Edelstahl, einer Aluminiumlegierung, Beton oder Kunststoff gebildet.

Ein weiterer Aspekt ist ein System umfassend zumindest zwei solcher Bodenelemente. Die Bodenelemente sind entlang ihrer Endflächen über die elektrischen Verbindungselemente elektrisch miteinander verbunden und über die mechanischen Verbindungselemente mechanisch miteinander verbunden. Das System zeichnet sich dadurch aus, dass eine Vielzahl von Bodenelementen miteinander mechanisch als auch elektrisch verbunden werden können um eine flächige Installation zu gewährleisten. Die Installation der Bodenelemente untereinander kann entlang einer jeden Seitenwand erfolgen, da alle Seitenwände mit den modularen Verbindungselementen ausgestattet sind. Hierdurch ist es nicht nur möglich, die Bodenelemente entlang einer Ausbreitungsrichtung miteinander zu verbinden, sondern flächig auszulegen.

Das System eignet sich insbesondere dazu, dass an dem Bodenelement eine Ladestation für Elektrofahrzeuge angeordnet ist.

Die Merkmale der Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert.

In der Zeichnung zeigen:
- Fig. 1a-g: Querschnitte durch diverse Bodenelemente;
- Fig. 2a-c: Draufsichten auf verschiedene Bodenelemente;
- Fig. 3: eine Draufsicht auf zusammengesetzte Bodenelemente;
- Fig. 4: eine Schnittansicht eines Bodenelementes mit einer Ladestation;
- Fig. 5a-c: Schnittansichten von modularen elektrischen und/oder mechanischen Verbindungselementen;
- Fig. 6: eine Schnittansicht eines elektrischen Verbindungselements;
- Fig. 7: eine Schnittansicht einer Verkabelung eines Bodenelements;
- Fig. 8a-b: Schnittansichten eines weiteren Ausführungsbeispiels eines Bodenelements;
- Fig. 8c-d: Draufsichten eines Bodenelements nach Figur 8a-b;
- Fig. 9a: Schnittansichten eines weiteren Ausführungsbeispiels eines Bodenelements;
- Fig. 9b -c: Draufsichten eines Bodenelements nach Figur 9a;
- Fig. 10a-c: Schnittansichten eines weiteren Ausführungsbeispiels eines Bodenelements.

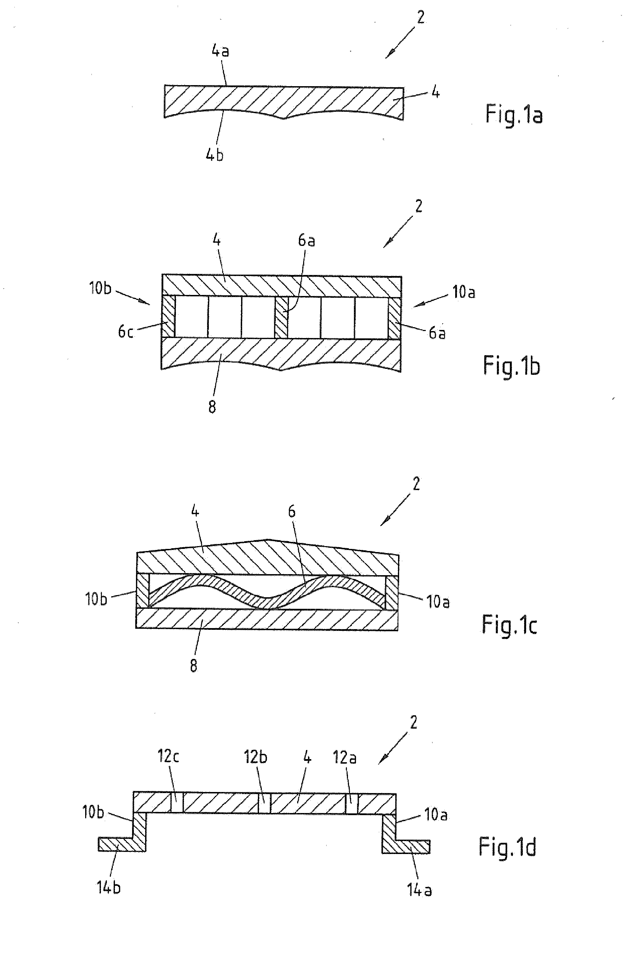

Figur 1a zeigt eine Schnittansicht eines Bodenelementes 2. Das Bodenelement 2 ist ausschließlich aus dem flächigen Trägerelement 4 gebildet. Die obere Oberfläche (Deckfläche) 4a des Trägerelements 4 ist dabei glatt. Die untere Oberfläche 4b (Unterboden) des Trägerelements 4 hat eine Profilstruktur derart, dass beim Aufsetzen des Trägerelements 4 auf einen Untergrund dieses lagestabil an dem Untergrund angeordnet werden kann. Ein Verrutschen kann dadurch erschwert werden. Wie auch in den nachfolgenden Figuren ist das Trägerelement 4 vorzugsweise aus Stahl, Aluminiumlegierung, Kunststoff, Beton oder dergleichen gebildet.

Figur 1b zeigt eine Schnittansicht einesweiteren Ausführungsbeispiels eines Bodenelements 2. Hierbei ist das Trägerelement 4 über stegförmige Abstandhalter 6a-c mit einem Unterboden 8 verbunden. Die stegförmigen Abstandhalter 6a-c können auch in einer Wabenstruktur angeordnet sein. Die Abstandhalter 6a-c verbinden Trägerelement 4 und Unterboden 8 mechanisch miteinander. Die Abstandhalter 6a-c bilden gleichzeitig die Seitenwände 10a, 10b des Bodenelements 2.

Nicht dargestellt sind in den Figuren 1a-g die modularen elektrischen und mechanischen Verbindungselementen an den jeweiligen Seitenwänden.

Figur 1c zeigt eine Schnittansicht eines weiterenBodenelements 2, bei dem das Trägerelement 4 in seinem Querschnitt eine Dachform hat und hierdurch eine Drainage ermöglicht ist. Das Trägerelement 4 ist über einen gewellten Abstandhalter 6 mit dem Unterboden 8 verbunden. Die Seitenwände 10a, 10b sind durch Abdeckbleche gebildet.

Figur 1d zeigt eine Schnittansicht eines Bodenelements 2, bei dem das Trägerelement 4 Drainagebohrungen 12a-c aufweist. Die Seitenwände 10a, 10b des Trägerelements 4 sind mit einem Flansch 14a, 14b versehen.

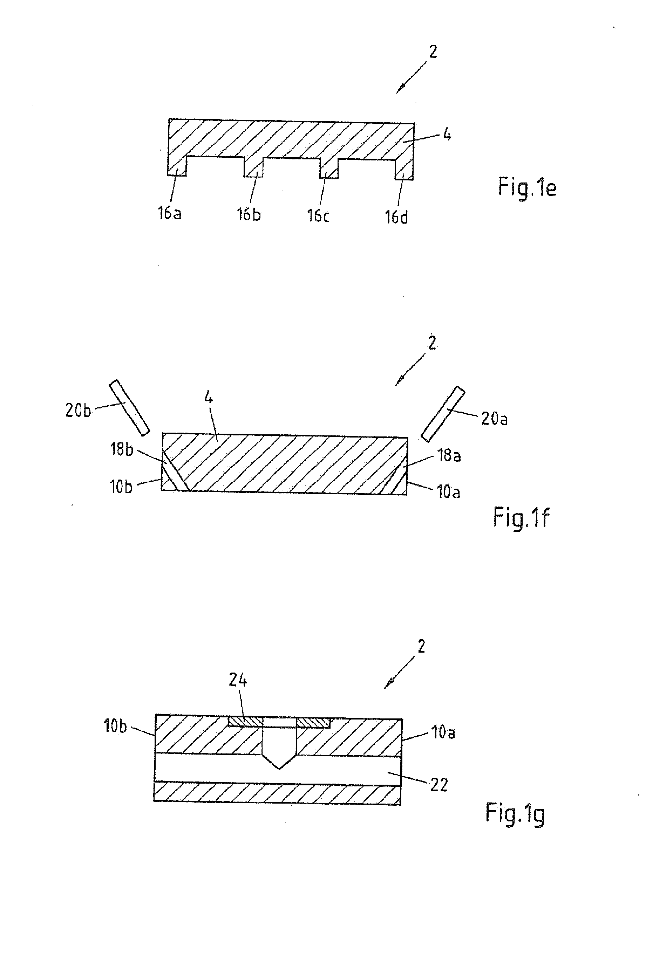

Das in der Figur 1e gezeigte Bodenelement 2 hat an der Unterseite des Trägerelements 4 Bodenanker 16a-d, die zum Befestigen des Bodenelements 2 in einem Untergrund dienen.

Die Bodenanker können jedoch auch, wie in der Figur 1f gezeigt, durch Aufnahmeelemente 18a, 18b, die beispielsweise an den Seitenwänden 10a, 10b angeordnet sind aufgenommen werden. Hierbei können Bolzen 20a, 20b durch die Aufnahmeelemente 18a, 18b geschoben werden, um in den Untergrund getrieben zu werden. Auch hierdurch kann das Bodenelement 2 am Untergrund befestigt werden.

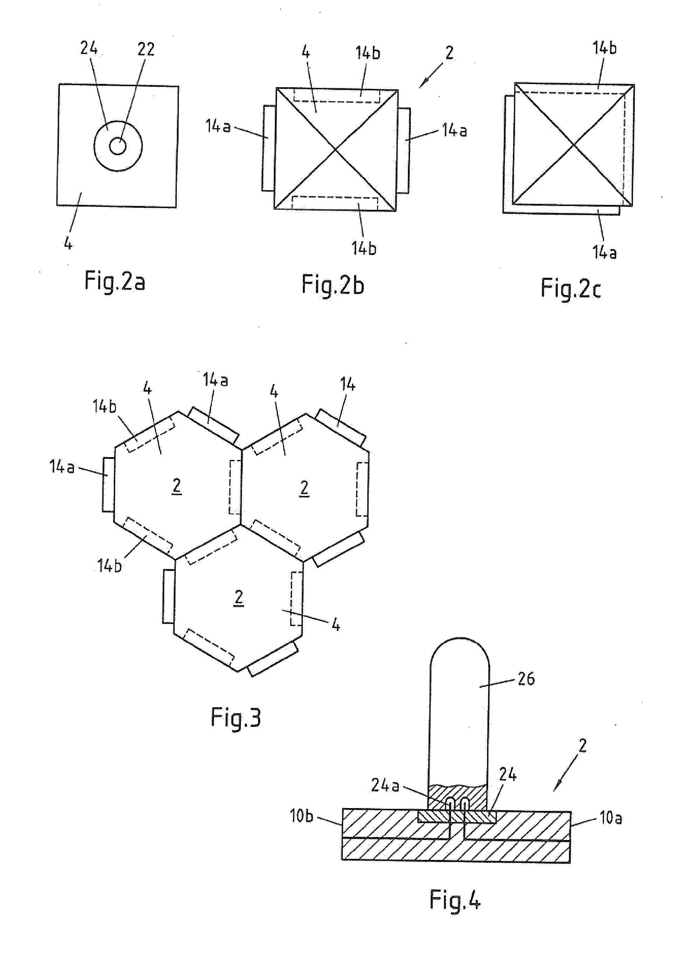

Figur 1g zeigt eine Schnittansicht eines Bodenelement 2 mit Kabelkanälen 22. Zu erkennen ist, dass ein Kabelkanal 22 in den Seitenwänden 10a, 10b münden kann. Auch ist es möglich, dass der Kabelkanal 22 in einem mechanischen Aufnahmeelement 24 für eine Ladestation münden kann. Ein solches mechanisches Aufnahmeelement 24 ist beispielsweise in Draufsicht auch in der Figur 2a gezeigt.

In der Figur 2a ist zu erkennen, dass mittig des Trägerelements 4 der Kabelkanal 22 die Oberfläche des Trägerelements 4 durchstößt. Das mechanische Aufnahmeelement 24 umgibt die Öffnung des Kabelkanals 22 und ist so geformt, dass es eine Ladestation aufnehmen kann.

Die Figur 2b zeigt ein weiteres Ausführungsbeispiel eines Bodenelements 2. Das Trägerelement 4 ist dabei, wie zu erkennen, zur Mitte hin geneigt, sodass eine Drainage ermöglicht ist. Ferner ist zu erkennen, dass an jeweils zwei Seitenwänden über das Trägerelement 4 hinausragende Flansche 14a an dem Bodenelement 2 angeordnet sind. An den jeweils anderen Seitenwänden sind Aufnahme 14b für Flansche eines jeweils anderen Bodenelements 2 vorgesehen. Vorzugsweise sind die Flansche 14a und die Aufnahmen 14b intermittierend an den Seitenwänden des Bodenelements 2 angeordnet.

In der Figur 2c sind die Flansch 14a bzw. die Aufnahmen 14b an jeweils zwei aneinander grenzenden Seitenwänden angeordnet. In der Art einer Nut/Feder Verbindung lassen sich so die Bodenelemente 2 zusammenstecken.

Figur 3 zeigt einen beispielhaften Zusammenbau einer Mehrzahl von Bodenelementen 2 zu einer flächigen Konstruktion. Zu erkennen ist, dass die Flansche 14 der Bodenelemente 2 die jeweiligen Trägerelemente 4 überlappen.

Figur 4 zeigt eine Schnittansicht eines Bodenelements 2 mit einer daran angeordneten Ladestation 26. Zu erkennen ist, dass die Ladestation 26 an dem mechanischen Befestigungselement 24 angeordnet ist. In dem mechanischen Befestigungselement 24 können elektrische Anschlusskontakte 24a vorgesehen sein, auf die die Ladestation 26 aufgesteckt sein kann. Die elektrischen Anschlusskontakte 24a sind mit den elektrischen Verbindungselementen im Bereich der Seitenwänden 10a, 10b verbunden.

Die elektrische Verbindung der Ladestation 26 mit dem mechanischen Befestigungselement 24 kann z.B. entsprechend einer Elektroverbindung einer Anhängekopplung eines Kfz sein. Hierbei kann z.B. eine elektrisch feststehende CEE 230V- oder 400V-Buchse vorgesehen sein. Ein hierzu kompatibler Stecker kann hierzu z.B. um 90° bis 180° drehbar mit definierter Ausgangslage in der Ladestation 26 vorgesehen sein. Auch ist es möglich, dass stets, unabhängig von der Anzahl der Phasen der Versorgungsspannung, eine 400V-Buchse verwendet wird. Gegebenenfalls kann dann nur eine Phase tatsächlich elektrisch genutzt werden.

Eine mechanische Verbindung der Ladestation 26 mit dem mechanischen Befestigungselement 24 kann durch ein steiles Gewinde realisiert werden. Das Gewinde kann derart sein, dass bei einer Umdrehung um 360° das gesamte Gewinde durchlaufen ist und die dabei überbrückte Länge des Gewindes dem Einsteckweg der Ladestation 26 in das Befestigungselement 24 entspricht. Auch kann die Verbindung in der Art einer Storz-Kupplung gebildet sein. Die elektrischen Kontaktteile können wegen des kurzen axialen Steckweges federgelagert aneinander anliegen. Auch kann eine Verriegelung der Ladestation 26 in einer Endposition z.B. durch einen Stift mit Schloss vorgesehen sein. Eine Freischaltung der elektrischen Verbindung kann z.B. durch einen Schalter, z.B. einen Mikroschalter in einer Endposition z.B. am/im Gewinde oder durch die Verriegelung erfolgen.

Darüber hinaus können neben den Energieleitern auch zusätzliche Kommunikationsleitungen zwischen Ladestation 26 und Bodenelement 2 verbunden werden.

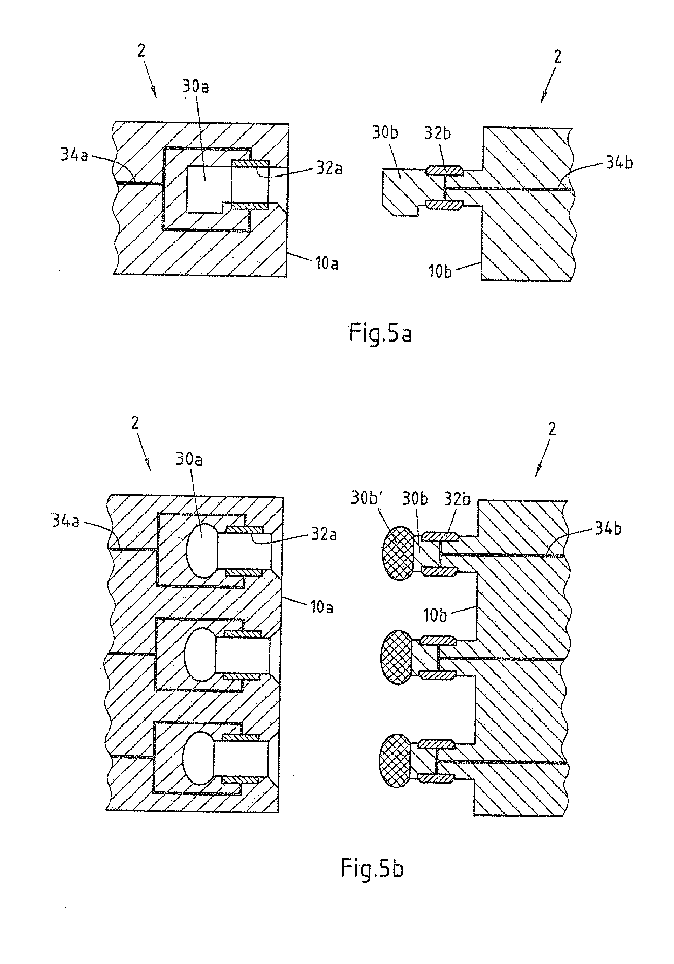

Figur 5a zeigt eine Detailansicht zweier Seitenwände 10a, 10b zweier Bodenelemente 2. Zu erkennen ist, dass an der ersten Seitenwand 10a ein mechanisches als auch ein elektrisches Verbindungselement 30a, 32a vorgesehen ist. Das mechanische Verbindungselement 30a ist als Rücksprung beziehungsweise Aufnahme in der Seitenwand 10a angeordnet. Es weist einen Hinterschnitt auf, das ein mechanisches Befestigungselement 30b eines anderen Bodenelements 2 hintergreifen kann. An den Innenwänden des mechanischen Befestigungselements 30a sind elektrische Kontakte 32a vorgesehen.

An einem zweiten Bodenelement 2 kann ein mechanisches Verbindungselement 30b als Vorsprung gebildet sein. Das mechanische Verbindungselement 30b ist komplementär zu dem mechanischen Verbindungselement 30a und kann in der Art einer Schnappverbindung mit diesem formschlüssig verrastet werden. Beim Verrasten der mechanischen Verbindungselemente 30a und 30b kommen die elektrischen Kontakte 32a in Kontakt mit den elektrischen Kontakten 32b, sodass beim mechanischen Verbinden der Bodenelemente 2 gleichzeitig eine elektrische Verbindung über die elektrischen Verbindungselemente 32a, 32b erfolgt. Die elektrischen Verbindungselemente 32b sind vorzugsweise umlaufend um den Umfang des mechanischen Verbindungselements 30b. Auf der anderen Seite sind die elektrischen Verbindungselemente 32a ebenfalls umlaufend am Innenumfang des mechanischen Verbindungselements 30a.

Die elektrischen Verbindungselemente 32b können in der Form einer Feder sein, sodass ein elektrischer Kontakt mit den elektrischen Verbindungselementen 32a sichergestellt ist. Die elektrischen Verbindungselemente 32a sind mit einem Kabel 34a verbunden und die elektrischen Verbindungselemente 32b sind mit einem Kabel 34b verbunden. Die Kabel 34a, b können in einem Kabelkanal 22 geführt sein oder auch fest in dem Trägerelement 4 des Bodenelements 2 angeordnet sein.

Figur 5b zeigt eine weitere Möglichkeit elektrische und mechanische Verbindungselemente zu kombinieren und diese komplementär zueinander an zwei Bodenelementen 2 vorzusehen. Wie zu erkennen ist, weist das mechanische Verbindungselement 30a wiederum einen Rücksprung auf, der sich nach innen hin aufweitet. An dem mechanischen Verbindungselement 30b ist an dessen Spitze ein elastisches Kopplungselement 30b' vorgesehen. Dieses kann beim Zusammenstecken der Verbindungselemente 30a und 30b gestaucht werden und erst in dem erweiterten, hinteren Bereich des Verbindungselements 30a es sich wieder ausdehnen. Durch die Ausdehnung wird eine mechanische Fixierung der mechanischen Verbindungselemente 30a und 30b miteinander erzielt.

Zu erkennen ist in der Figur 5b, dass drei mechanische Verbindungselemente 30a, 30b jeweils an einer Seitenwand 10a, 10b vorgesehen sind. An jedem der Verbindungselemente kann in der Art der elektrischen Verbindungselemente 32a, 32b gemäß der Figur 5a ein elektrisches Verbindungselement 32a, 32b vorgesehen sein. Die drei elektrischen Verbindungselemente 32a an der Seitenwand 10a sind galvanisch voneinander getrennt und mit jeweils einem elektrischen Leiter 34a verbunden. Selbiges gilt für die elektrischen Verbindungselemente 32b an den mechanischen Verbindungselementen 30b an der Seitenwand 10b, die ebenfalls galvanisch voneinander entkoppelt sind und jeweils in einem elektrischen Leiter 34b münden. Mit Hilfe der gezeigten Steckvorrichtung ist es möglich, zwei Bodenelemente 2 mechanisch als auch elektrisch gleichzeitig miteinander zu verbinden.

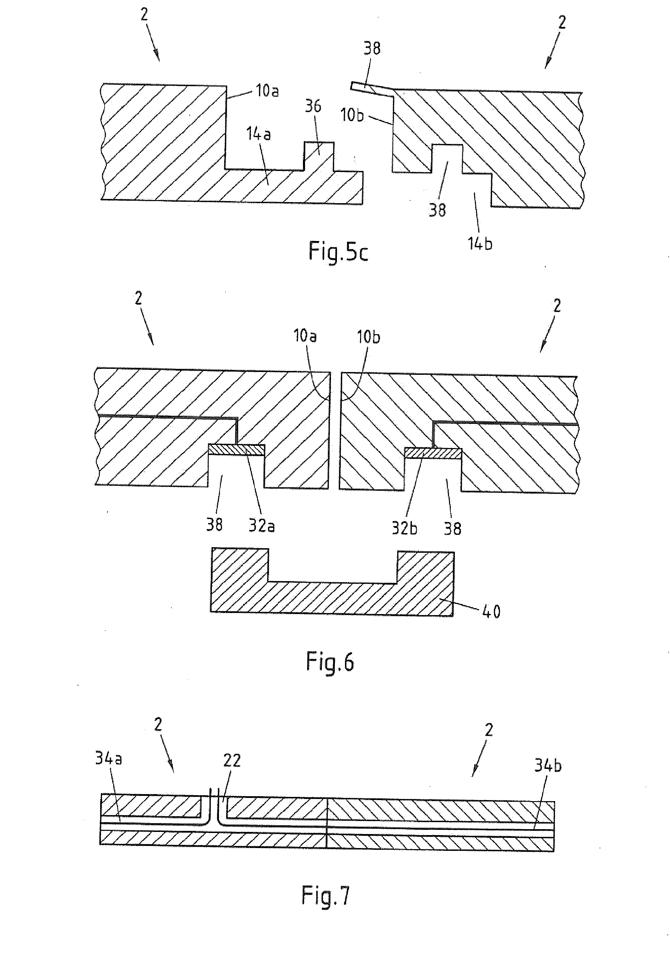

Figur 5c zeigt ein weiteres Ausführungsbeispiel eines mechanischen Verbindungselements. Zu erkennen ist, dass an einem Flansch 14a an einer Seitenwand 10a eines Bodenelements 2 ein Vorsprung 36 vorgesehen ist. Eine dazu komplementäre Aufnahme 38 ist an einer Aufnahme 14b an einer Seitenwand 10b eines weiteren Bodenelements 2 vorgesehen. Beim Ineinanderstecken verrastet der Vorsprung 36 in der Aufnahme 38 und die Bodenelemente 2 können zumindest in einer Ebene nicht mehr gegeneinander verschoben werden. Ein zwischen den Bodenelemente 2 im Bereich der Seitenwände 10a, 10b sich bildender Spalt kann durch eine Dichtlippe 38 überbrückt werden.

Figur 6 zeigt die Möglichkeit einer elektrischen Verbindung über ein Kopplungselement. Jedes Bodenelement 2 weist im Bereich der Seitenwände 10a, 10b jeweils einen Rücksprung 38 auf. Über ein elektrisches Kopplungselement 40 können elektrische Kontakte 32a, 32b der jeweiligen Bodenelemente 2 elektrisch miteinander verbunden werden. Hierzu wird das Kopplungselement 40 in die Rücksprünge 38 gesteckt, sodass eine elektrisch leitende Verbindung zwischen den Kontakten 32a und 32b hergestellt wird.

Figur 7 zeigt die Möglichkeit der Verkabelung der Bodenelemente 2 über Kabelkanäle 22. Zu erkennen ist, dass durch die Kabelkanäle 22 die elektrischen Kabel 34a und 34b verlegt werden können. Hierdurch wird eine besonders einfache Verkabelung der Bodenelemente 2 miteinander gewährleistet.

Mit Hilfe der gegenständlichen Bodenelemente ist es in besonders einfacher Weise möglich, eine großflächige Versorgung mit elektrischen Installationen bei geringem Montageaufwand zu ermöglichen.

Eine hermaphrodite elektrische Verbindung kann z.B. in der Form eines Anderson Powerpoles erfolgen, Hierbei können zwei oder mehr Anderson Powerpoles im Bereich einer Seitenwand nebeneinander angeordnet werden. Insbesondere können die Anderson Powerpoles vorzugsweise in der Mitte zumindest einer Seitenfläche, insbesondere auf der Seite liegend, in Reihe montiert vorgesehen sein. Hierbei kann auch Verpolungsschutz vorgesehen sein.

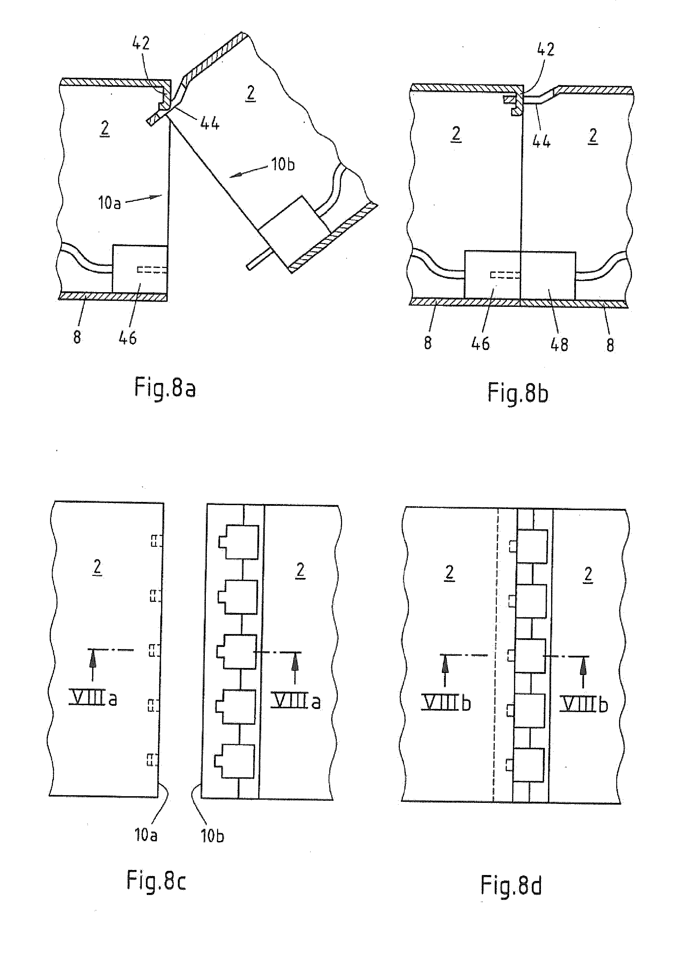

Figur 8a zeigt eine weitere Möglichkeit der Verbindung zwischen zwei Bodenelementen 2. Gezeigt ist eine schematische Seitenansicht. Das linke Bodenelement 2 hat an einer Seitenwand 10a zum einen eine mechanische Aufhängung 42 zur Aufnahme einer Gelenkstange 44 des rechten Bodenelements 2. Die Gelenkstange 44 lässt sich in die Aufhängung 42 einhängen und somit das rechte Bodenelement 2 um die Aufhängung 42 herum schwenken.
Im Bereich des Unterbodens 8 hat das linke Bodenelement 2 eine elektrische Buchse 46 zur Aufnahme eines elektrischen Steckers 48 des rechten Bodenelements 2. Beim Verschwenken der Bodenelemente 2 zueinander, wird der Stecker 48 in die Buche 46 hinein geschwenkt und eine elektrische Verbindung hergestellt. Über die Aufhängung 42 und die Gelenkstange 44 sind die beiden Bodenelemente 2 mechanische miteinander gekuppelt;

In der Figur 8a ist das rechte Bodenelement 2 mit seiner Gelenkstange 44 zunächst nur in der Aufhängung 42 eingehängt. In Figur 8b ist dann die Position der Bodenelemente 2 dargestellt, in der die elektrische Verbindung durch ein Verschwenken hergestellt ist.

Um mehr als eine elektrische Verbindung zwischen zwei Bodenelementen 2 erstellen zu können, sind entlang einer Seitenwand 10a, 10b zumindest zwei solcher Verbindungen notwendig. In der Figur 8c sind in einer Draufsicht die beiden Bodenelemente 2 gemäß Figur 8a dargestellt. Zu erkennen ist, dass jedem Stecker 48 eine Buchse 46 zugeordnet ist. Figur 8d zeigt die beiden Bodenelemente 2 in miteinander verbundener Stellung entsprechend Figur 8b. Der Schnitt VIIIa in Figur 8c wird in der Figur 8a gezeigt. Der Schnitt VIIIb in Figur 8b wird in der Figur 8b gezeigt.

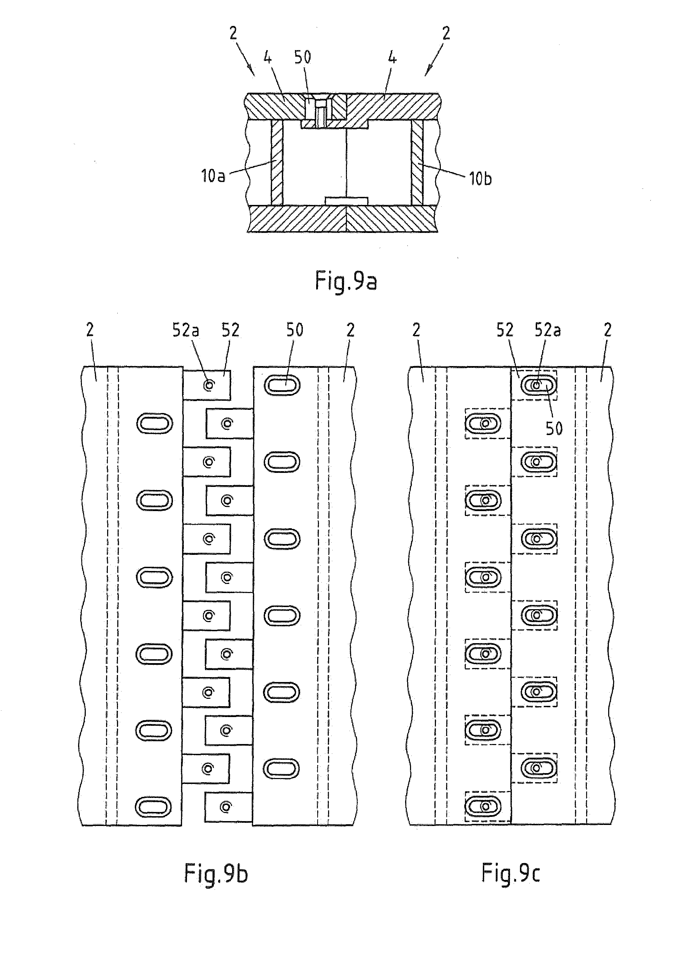

Die mechanische Verbindung zweier Bodenelemente 2 ist auch gemäß einem Ausführungsbeispiel wie in Figur 9 gezeigt möglich.

Hierbei ist in der Figur 9a eine Seitenansicht einer Verbindung zweier Bodenelements 2 gezeigt. in dem rechten Bodenelemente 2 sind auf dem Trägerelement 4 Bohrungen 50 vorgesehen. zu den Bohrungen 50 sind entsprechende Flansche 52 an dem linken Bodenelement 2 vorgesehen. In der Figur 9a ist zunächst zu erkennen, dass die Seitenwände 10a, 10b von der äußeren Kante des Trägerelements 4 zurückspringen.
In diesem Rücksprung können die mechanischen und elektrischen Verbindungselemente aufgenommen sein. Zu erkennen ist ferner, dass die Flansche 52 über as Trägerelement 4 hinaus ragen und in den Rücksprung des jeweils anderen, hier linken Bodenelements 2 eingreifen. In der zusammengesteckten Position fluchten Bohrung 50 und eine Bohrung 52a in dem Flansch 52 derart, dass mit Hilfe einer Schraube ein verschrauben der Bodenelemente 2 möglich ist.

Die Bohrung 50 kann als Langloch geformt sein, um eine Positionierung der Bodenelemente 2 zueinander zu ermöglichen. Dies ist z.B. in Figur 9b erkennbar. Dort ist eine Draufsicht auf zwei Bodenelemente 2 gezeigt. Zu erkennen ist, dass die mechanischen und/oder elektrischen Verbindungselemente miteinander verzahnt ineinander greifen können. Im gezeigten Beispiel greifen die Flansche 52 in die Bereiche der Bohrungen 50 ein.

Figur 9c zeigt die Bodenelemente 2 in einer verbundenen Position. Zu erkennen ist, dass die Flansche 52 bzw. deren Bohrungen 52a mit den Bohrungen 50 fluchten und ein Verschrauben der Bodenelemente 2 ermöglicht ist.

Es versteht sich, dass die Anzahl der Flansche 52 und Bohrungen 50 pro Seitenwand 10a, 10b variabel gestaltet sein kann. Es kann ausreichen, nur zwei oder drei Flansche 52 respektive Bohrungen 50 vorzusehen. Die gezeigte Anzahl ist rein beispielhaft. Um eine flächige Verlegung zu ermöglichen, müssen zwischen den Flanschen Abstände zueinander vorgesehen sein. Insbesondere die äußeren Flansche einer jeden Seitenwand müssen in einem Abstand zu Abschluss der jeweiligen Seitenwand angeordnet sein. Die Flansche von einander angrenzenden Seitenwänden, insbesondere diejenigen Flansche, die zahnförmig ineinander greifen müssen einen solchen Abstand voneinander haben, dass die Bodenelemente 2 gegeneinander verschiebbar sind.

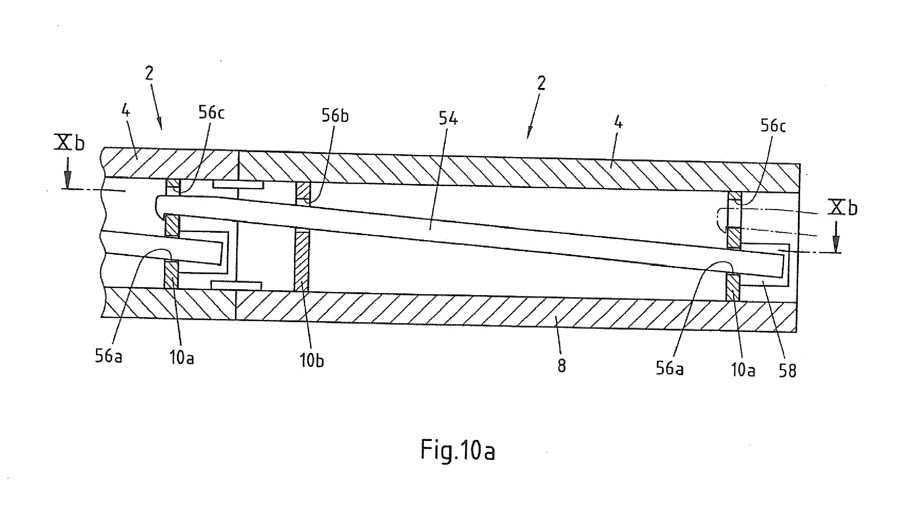

Figur 10a zeigt eine Schnittansicht eines weiteren Ausführungsbeispiels. Hierbei ist eine Spannstange 54 vorgesehen. Die Spannstange 54 verläuft winkelig zum Trägerelement 4 bzw. dessen Deckfläche und/oder zum Unterboden 8 des Bodenelements 2. Die Spannstange 54 erstreckt sich vorzugsweise zwischen einer ersten Seitenwand 10a und einer der ersten Seitenwand 10a gegenüberliegenden Seitenwand 10b. In der Seitenwand 10a ist eine Öffnung 56a, vorzugsweise ein Langloch, zur Aufnahme der Spannstange 54 vorgesehen. Die Spannstange 54 lässt sich transversal innerhalb der Öffnung 56a verschieben.

Die Spannstange 54 kann vorzugsweise in einer zwischen den Seitenwänden 10a, 10b und zwischen dem Trägerelement 4 und dem Unterboden 8 angeordneten Führung geführt sein und dort ebenfalls in einer Öffnung verschiebbar angeordnet sein.

Die Spannstange 54 wird darüber hinaus in einer Öffnung 56b in der zweiten Seitenwand 10b verschiebbar gehalten. Die Spannstange 54 ist an einem ersten distalen Ende mit einem Spannhebel 58 verbunden. An ihrem zweiten distalen Ende hat die Spannstange 54 eine Spannhaken 60.

Der Spannhebel 58 ist zum Einen drehbar an der Spannstange 54 angeordnet. Dabei ist der Spannhebel 58 vorzugsweise exzentrisch an der Spannstange 54 angeordnet und gegen die Seitenwand 10a gelagert. Ein verdrehen des Spannhebel 58 um die Lagerung an der Spannstange 54 führt dazu, dass der Radius des Spannhebels 58 sich gegenüber der Seitenwand 10a vergrößert. Dadurch wird, wenn der Spannhebel 58 an der Seitenwand 10a gelagert ist, die Spannstange relativ zur Seitenwand 10a bewegt und somit in der Öffnung 56a transversal bewegt.

Vorzugsweise ist die Öffnung 56a in der ersten Seitenwand 10a in einer unteren Hälfte, vorzugsweise einem unteren Drittel zwischen dem Trägerelement 4 und dem Unterbodenelement 8 angeordnet und die Öffnung 56b in der zweiten Seitenwand 10b in einer oberen Hälfte, vorzugsweise einem oberen Drittel zwischen dem Trägerelement 4 und dem Unterbodenelement 8 angeordnet. Diese Anordnung kann auch genau umgekehrt sein.

In der ersten Seitenwand 10a ist im jeweils anderen Drittel bzw. in der jeweils anderen Hälfte zur Öffnung 56a eine weitere Öffnung 56c vorgesehen. In diese Öffnung 56c kann der Spannhaken 60 eines weiteren Bodenelements 2 eingehakt werden, wie nachfolgend beschrieben.

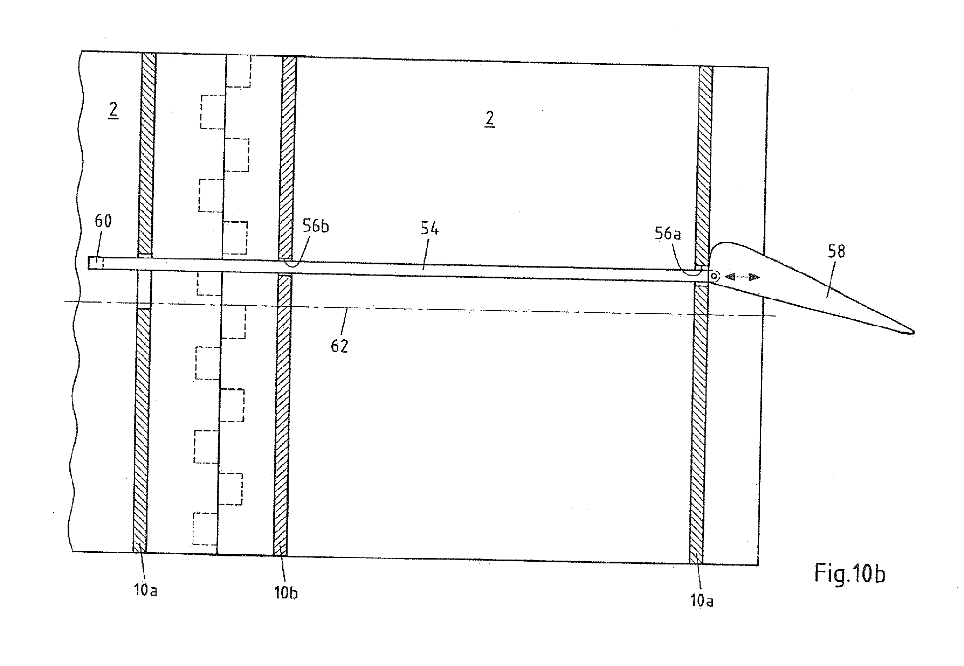

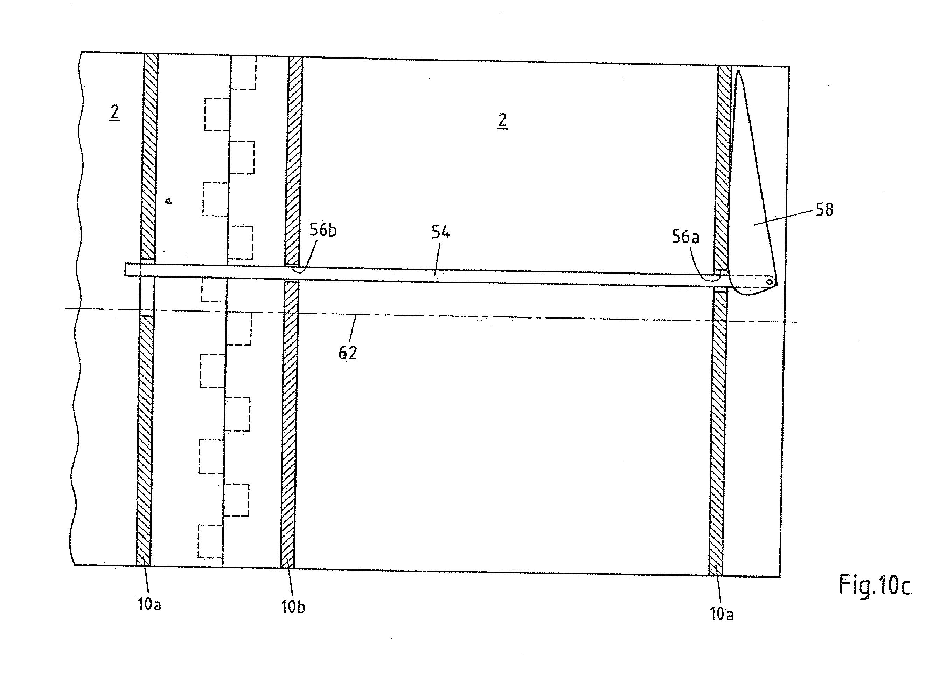

Zum Verbinden zweier Bodenelemente 2 wird der Spannhebel 58 zunächst in die in Figur 10b (diese und die Figur 10czeigt den Schnitt Xb gemäß Figur 10a) gezeigt Position verschwenkt. Hierdurch wird die Spannstange 54 in Richtung der Öffnung 56b bewegt und der Spannhaken 60 ragt aus der seitlichen Umrandung des Trägerelements 4 heraus. Hierdurch kann der Spannhaken 60 in die Öffnung 56c des weiteren Bodenelements 2 eingeführt werden. Anschließend wird der Spannhaken 60 an der Seitenwand 10a des weiteren Bodenelements 2 verhakt, in dem der Spannhaken 60 im Bereich der Öffnung 56c die Seitenwand 10a hintergreift.

Nachdem der Spannhaken 60 in der Öffnung 56c des weiteren Bodenelements verrastet ist, kann der Spannhebel 58 in die in Figur 10c gezeigt Position verschwenkt werden. Hierdurch wird die Spannstange 54 in Richtung der Seitenwand 10a des ersten Bodenelements 2 gezogen und der Spannhaken zieht gleichzeitig das zweite Bodenelement 2 in Richtung des ersten Bodenelements 2. Die Bodenelemente 2 sind durch den Spannhaken 60 mechanisch miteinander verbunden.

Wie in den Figuren 10b und 10c zu erkennen ist, ist die Spannstange 54 vorzugsweise seitlich von der Mittelachse 62 angeordnet, um zu vermeiden, dass die Spannstange 54 in dem Bereich des mechanischen Befestigungselements 24 liegt und somit eine Montage einer Ladestation behindert wäre.

Schließlich sei angemerkt, dass in den Figuren 10 lediglich die mechanische Befestigung näher erläutert ist. Angedeutet ist jedoch auch eine elektrischen Verbindung entsprechend der Verbindung gemäß der Figuren 9 durch eine ineinandergreifende Verzahnung von Zungen und Laschen in den jeweiligen Bodenelementen 2.

## Patentansprüche

1. Bodenelement für elektrische Installationen umfassend:
ein flächiges Trägerelement mit zumindest drei Endflächen und einer im Wesentlichen ebenen Oberfläche,
- einem modularen elektrischen Verbindungselement an zumindest einer Endfläche und
- einem modularen mechanischen Verbindungselement an einer Endfläche.

2. Bodenelement nach Anspruch 1, **dadurch gekennzeichnet, dass** eine Endfläche eine Seitenwand oder eine Unterseite des Trägerelements ist.

3. Bodenelement nach Anspruch 1 oder 2, **dadurch gekennzeichnet, dass** jeweils ein elektrisches Verbindungselement an zumindest zwei Endflächen vorgesehen ist und/oder dass jeweils ein mechanisches Verbindungselement an zumindest zwei Endflächen vorgesehen ist.

4. Bodenelement nach einem der Ansprüche 1 bis 3, **dadurch gekennzeichnet, dass** zumindest ein Bodenanker oder ein Aufnahmeelement im Bereich einer Unterseite des Bodenelements, der Seitenwänden und/oder der Mitte des Trägerelements angeordnet ist.

5. Bodenelement nach einem der vorangehenden Ansprüche, **dadurch gekennzeichnet, dass** die elektrischen Verbindungselemente eine Aufnahme für ein elektrisches Kabel aufweisen und/oder dass die elektrischen Verbindungselemente mit unterhalb der Oberfläche des Trägerelements angeordneten Kabelkanälen in Verbindung stehen oder dass die elektrischen Verbindungselemente zumindest eins, vorzugsweise zumindest zwei, insbesondere drei, galvanisch voneinander getrennte Kontaktelemente aufweisen, wobei die Kontaktelement jeweils mit einem unterhalb der Oberfläche des Trägerelements angeordneten elektrischen Leiter elektrisch verbunden sind.

6. Bodenelement nach einem der vorangehenden Ansprüche, **dadurch gekennzeichnet, dass** die elektrischen Verbindungselemente jeweils zumindest Stecker und/oder Kupplungen aufweisen oder dass die elektrischen Verbindungselemente hermaphrodit gebildet sind und/oder dass die elektrischen Verbindungselemente an einer ersten Endfläche zumindest einen Stecker aufweisen und an einer an die erste Endfläche unmittelbar angrenzenden Endfläche eine zu dem Stecker komplementäre Kupplung aufweisen.

7. Bodenelement nach einem der vorangehenden Ansprüche, **dadurch gekennzeichnet, dass** die Kontaktelemente der elektrischen Verbindungselemente in die mechanischen Verbindungselemente integriert sind.

8. Bodenelement nach einem der vorangehenden Ansprüche, **dadurch gekennzeichnet, dass** die mechanischen Verbindungselemente von zwei Bodenelementen formschlüssig miteinander in Eingriff kommen und/oder dass ein mechanisches Verbindungselement an einer ersten Endfläche komplementär zu einem mechanischen Verbindungselement an zumindest einer zweiten Endfläche gebildet ist und/oder dass die mechanischen Verbindungselemente als Schnappverbindung gebildet sind und/oder dass die mechanischen Verbindungselemente an einem an einer dem Trägerelement abgewandten Außenkante zumindest einer Seitenwand zumindest teilweise verlaufenden Flansch angeordnet sind und/oder dass die mechanischen Verbindungselemente als Vorsprung und/oder Rücksprung bzw. Aufnahme an den Seitenwänden oder dem Flansch gebildet sind und/oder dass die mechanischen Verbindungselemente im Wesentlichen parallel zur Oberfläche des Trägerelements oder im Wesentlichen senkrecht zur Oberfläche des Trägerelements verlaufen.

9. Bodenelement nach einem der vorangehenden Ansprüche, **dadurch gekennzeichnet, dass** das Trägerelement und ein Unterbodenelement beabstandet voneinander miteinander verbunden sind und/oder dass das Trägerelement und das Unterbodenelement durch eine Wabenstruktur miteinander verbunden sind.

10. Bodenelement nach einem der vorangehenden Ansprüche, **dadurch gekennzeichnet, dass** das Unterbodenelement auf der dem Trägerelement abgewandten Seite eine Reliefstruktur hat, insbesondere eine wabenförmige Reliefstruktur.

11. Bodenelement nach einem der vorangehenden Ansprüche, **dadurch gekennzeichnet, dass** das Trägerelement rechteckig, quadratisch oder hexagonal ist und/oder dass das Trägerelement ein mechanisches Aufnahmeelement für eine Ladestation für Elektrofahrzeuge aufweist wobei vorzugsweise an dem mechanischen Aufnahmeelement elektrische Kontakte angeordnet sind.

12. Bodenelement nach einem der vorangehenden Ansprüche, **dadurch gekennzeichnet, dass** zumindest eine Seitenwand eine gegenüber zumindest einer anderen Seitenwand geringere Höhe aufweist.

13. Bodenelement nach einem der vorangehenden Ansprüche, **dadurch gekennzeichnet, dass** das Trägerelement biegesteif ist und insbesondere aus Eisenlegierungen, Aluminiumlegierungen, Beton oder Kunststoff gebildet ist.

14. System umfassend zumindest zwei Bodenelemente nach Anspruch 1, wobei die Bodenelemente an ihren Endflächen über die elektrischen Verbindungselemente elektrisch miteinander verbunden sind und über die mechanischen Verbindungselemente mechanisch miteinander verbunden sind.

15. System nach Anspruch 14, **dadurch gekennzeichnet, dass** an einem Bodenelement eine Ladestation für Elektrofahrzeuge angeordnet ist.
